# EUROPÄISCHE PATENTANMELDUNG

(11) **EP 1 574 841 A1**
(43) Veröffentlichungstag der Anmeldung: **14.09.2005**
(21) Anmeldenummer: 04005482.7
(22) Anmeldetag: 08.03.2004
(51) Int. Cl.: G01N 21/17

(54) **Photoakustischer Gassensor**

(71) Anmelder: Siemens Building Technologies AG, 8008 Zürich (CH)
(72) Erfinder: Pleisch, Rolf, 8604 Hegnau-Volketswil (CH); Steiner, Peter, 8645 Jona (CH)
(74) Vertreter: Berg, Peter

(57) **Zusammenfassung**

Ein photoakustischer Gassensor enthält eine Mess- und eine Referenzzelle (1 bzw. 2), einen Strahler und ein Differenzmikrofon (3) für die Messung der Druckdifferenz zwischen Mess- und Referenzzelle (1 bzw. 2). Das Differenzmikrofon (3) ist durch ein sogenanntes Noise Cancelling Mikrofon der in Mobiltelefonen verwendeten Art gebildet und weist Elektroden in der Form von konzentrischen Kreisringen sowie ein dosenförmiges Gehäuse auf, dessen Boden die Vorderseite des Mikrofons bildet und dessen Rückseite eine Bördelung für die Fixierung einer Rückplatte aufweist. Das Differenzmikrofon (3) ist auf einem Print (8) befestigt ist, welcher eine erste Ringnut für die Positionierung der genannten Bördelung aufweist.

## Beschreibung

Die vorliegende Erfindung betrifft einen photoakustischen Gassensor mit einer Mess- und einer Referenzzelle, einem Strahler und einem Differenzmikrofon für die Messung der Druckdifferenz zwischen Mess- und Referenzzelle.

Ein in der DE-A-40 18 393 beschriebener photoakustischer Gassensor dieser Art wird bisher kaum eingesetzt, weil praktisch keine günstigen Mikrofone verfügbar und übliche günstige Mikrofone für die typischen tiefen Signalfrequenzen nur sehr beschränkt geeignet sind. Aus diesem Grund werden zur Unterdrückung von Störschallquellen meistens zwei Mikrofone in elektrischer Differenzschaltung eingesetzt (siehe dazu EP-A-0 855 592). Dabei hat man aber das Problem, Mikrofone mit einer geeignet tiefen unteren Eckfrequenz zu finden, weil günstige Mikrofone aus Audioapplikationen eine typische untere 3dB-Frequenz bei 20 bis 30Hz, also im Bereich der Signalfrequenz des Gassensors, haben, was zu Streuungen der Eckfrequenz und Veränderungen von dieser durch Umwelteinflüsse führt. Ausserdem ist die Differenzbildung schwierig, weil die Mikrofone auf Messgenauigkeit im Prozentbereich gepaart werden müssen. Das führt zusammen mit der erwähnten Drift der 3dB-Frequenz dazu, dass eine wirksame Störunterdrückung kaum realisierbar ist.

Durch die Erfindung soll nun ein in der Praxis einsetzbarer photoakustischer Gassensor der eingangs genannten Art angegeben werden, dessen Differenzmikrofon kostengünstig und für die für photoakustische Gassensoren typischen tiefen Signalfrequenzen geeignet ist.

Diese Aufgabe wird erfindungsgemäss dadurch gelöst, dass das Differenzmikrofon durch ein so genanntes Noise Cancelling Mikrofon der in Mobiltelefonen verwendeten Art gebildet ist.

Da diese Mikrofone im Freifeld einen völlig unbrauchbaren Frequenzgang aufweisen, erscheinen sie als ungeeignet für die typische Signalfrequenz von 20 bis 30 Hz. Praktische Versuche haben aber das überraschende Ergebnis gezeigt, dass die Mikrofone für die vorgesehene Anwendung in photoakustischen Gassensoren sehr gute Eigenschaften mit einem flachen Frequenzgang bis zum 3dB-Punkt aufweisen. Die Eckfrequenz liegt in der Regel bei etwa 1 bis 4Hz, also deutlich unter 10Hz, so dass sie das Signal bei der Nutzfrequenz nur unwesentlich beeinflusst. Dazu kommt, dass die Mikrofone ausserordentlich kostengünstig und in unterschiedlichsten miniaturisierten Bauformen erhältlich sind.

Eine erste bevorzugte Ausführungsform des erfindungsgemässen Gassensors ist dadurch gekennzeichnet, dass das Differenzmikrofon Elektroden in der Form von konzentrischen Kreisringen aufweist. Die untere Eckfrequenz des Differenzmikrofons ist kleiner als 10Hz und liegt vorzugsweise zwischen 1 und 4Hz.

Eine zweite bevorzugte Ausführungsform ist dadurch gekennzeichnet, dass das Differenzmikrofon ein dosenförmiges Gehäuse aufweist, dessen Boden die Vorderseite des Mikrofons bildet und dessen Rückseite eine Bördelung für die Fixierung einer Rückplatte aufweist.

Eine dritte bevorzugte Ausführungsform ist dadurch gekennzeichnet, dass das Differenzmikrofon auf einem Print befestigt ist, welche eine erste Ringnut für die Positionierung der genannten Bördelung aufweist.

Die Mikrofonelektroden in der Form von konzentrischen Kreisringen haben den Vorteil, dass die Teile beim Bestücken des Prints nicht ausgerichtet zu werden brauchen, was eine einfache Montage mit einem Roboter ermöglicht. Die einfache Montage wird durch die erste Ringnut noch zusätzlich erleichtert, weil dadurch das Mikrofon mit seiner Gehäusebördelung automatisch in die richtige Position geführt wird.

Weitere bevorzugte Ausführungsformen und vorteilhafte Weiterentwicklungen des erfindungsgemässen photoakustischen Gassensors sind in den abhängigen Ansprüchen 5 bis 9 beansprucht.

Im Folgenden wird die Erfindung anhand eines Ausführungsbeispiels und der Zeichnungen näher erläutert; es zeigt:
Fig. 1 eine Explosionsdarstellung eines erfindungsgemässen photoakustischen Gassensors,
Fig. 2 ein Detail des Gassensors von Fig. 1;
Fig. 3 eine erste schematische Skizze zur Erläuterung der Herstellung des Gassensors; und
Fig. 4 eine zweite schematische Skizze zur Erläuterung der Herstellung des Gassensors.

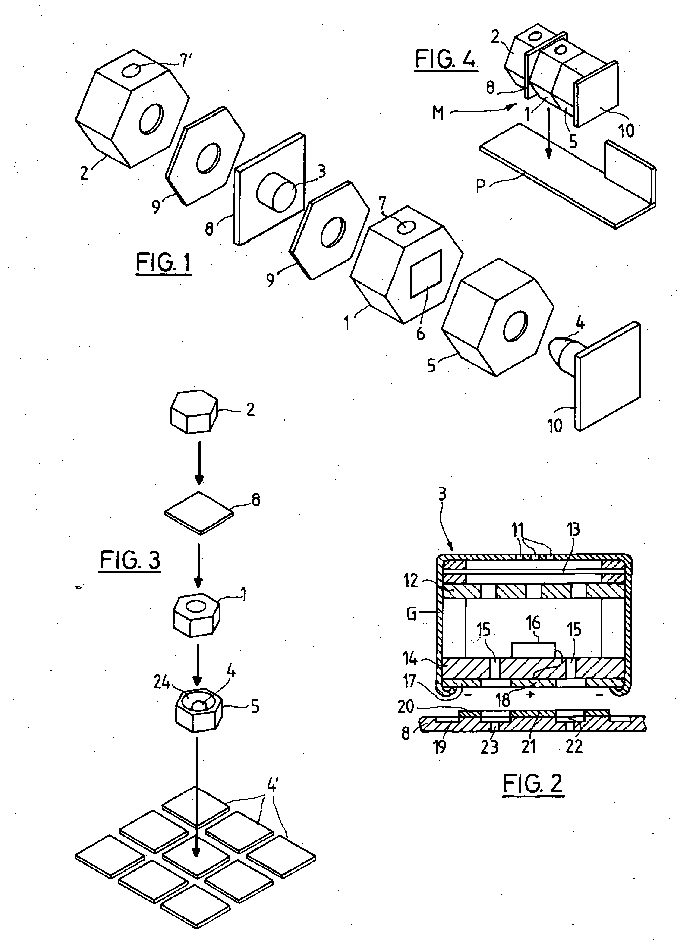

Der in Figur 1 dargestellte photoakustische Gassensor besteht aus einer Messzelle 1, einer Referenzzelle 2, einem zwischen den beiden Zellen 1 und 2 angeordneten bidirektionalen Differenzmikrofon 3, einer der Messzelle 1 zugeordneten Mikroglühlampe 4 und einem Reflektorgehäuse 5 mit einem Reflektor zur Bündelung der von der Mikroglühlampe 4 ausgesandten Strahlung auf ein in der der Mikroglühlampe 4 zugewandten Seitenwand der Messzelle 1 angeordnetes Fenster, in welches ein Infrarot-Bandpassfilter 6 eingesetzt ist. Messzelle 1 und Referenzzelle 2 sind bezüglich Aufbau und Dimensionen absolut identisch. Sowohl die Messzelle 1 als auch die Referenzzelle 2 sind an einer äusseren Seitenwand mit einer Bohrung versehen, in welche eine gaspermeable Membran 7 beziehungsweise 7' eingesetzt ist. Das Differenzmikrofon 3 ist auf einem Print 8 montiert und zu beiden Seiten des Differenzmikrofons 3 ist je eine Dichtung 9 (optional) vorgesehen. Die Mikroglühlampe 4 ist ebenfalls auf einem Print montiert, der mit dem Bezugszeichen 10 bezeichnet ist.

Die Mikroglühlampe 4 emittiert Licht über ein breites Spektrum bis in den Infrarotbereich; in den meisten Fällen wird für die Gasdetektion eine Spektrallinie im Infrarotbereich verwendet. Das Infrarot-Bandpassfilter 6 hat einen für das zu detektierende Gas charakteristischen Durchlassbereich in Form eines schmalen Spektralbandes, welches für den Nachweis von CO₂ bei 4.25 µm, von NH₃ bei 10 µm und von CH₄ bei 3.4 µm liegt. Das nachzuweisende Gas gelangt durch die beiden gaspermeablen Membranen 7 und 7' in die Messzelle 1 beziehungsweise in die Referenzzelle 2. Das in der Messzelle 1 anwesende Gas wird durch moduliertes Licht der Mikroglühlampe 4 bestrahlt. Das Gas absorbiert die Lichtstrahlung und erwärmt sich dadurch. Daraus entsteht eine thermische Ausdehnung und, entsprechend der Modulation der Lichtstrahlung, eine periodische Druckschwankung, so dass eine akustische Druckwelle verursacht wird, deren Stärke in direktem Verhältnis zur Konzentration des Gases steht.

Der Störschall, der von aussen auf die Membranen 7, 7' trifft, wird durch diese abgeschwächt in der Messzelle 1 und der Referenzzelle 2 je mit identischer Stärke auftreten. Dieser Störschall kompensiert sich somit direkt an der Membran des Mikrofons 3, ohne dass grosse Signale entstehen, die elektronisch subtrahiert werden müssten. Da zu beiden Seiten der Mikrofonmembran die selben Druckschwankungen herrschen, findet an dieser eine direkte physikalische Subtraktion der durch Störschall verursachten Signale statt, so dass die Mikrofonmembran gar nicht erst ausgelenkt wird. Die Mikrofonmembran liefert somit unmittelbar den durch das Gas in der Messzelle 1 verursachten akustischen Druck und damit die gesuchte Konzentration.

Das Mikrofon 3 ist ein so genanntes "Noise Cancelling" Mikrofon, wie es in Mobiltelefonen Anwendung findet. Wenn dieses Mikrofon als Differenzmikrofon verwendet und zwischen zwei akustisch praktisch geschlossenen Zellen, nämlich zwischen Messzelle 1 und Referenzzelle 2, eingebaut wird, zeigt es sehr gute, auf die Aufgabenstellung zugeschnittene Eigenschaften.

In Fig. 2 ist das Mikrofon 3 im Schnitt dargestellt. Dieses besteht darstellungsgemäss aus einem einseitig offenen Gehäuse G von der Form einer Dose, deren Boden die Vorderseite des Mikrofons bildet. In diesem Boden sind Bohrungen 11 für den Schalldurchtritt zur der zwischen dem Boden des Gehäuses 10 und einer Metall-Backelektrode 12 eingespannten Mikrofonmembran 13 aus metallisiertem Kunststoff vorgesehen. Die Seitenwand des Gehäuses 18 ist an der Rückseite des Mikrofons umgebördelt und fixiert eine Rückwand 14, die mit kleinen Ausgleichsbohrungen, so genannten Back Ports 15 versehen ist und an ihrer der Metall-Backelektrode 12 zugewandten Innenseite einen FET 16 und an ihrer Aussenseite zwei Kreiselektroden 17 und 19 trägt.

Die Back Ports 15 sind für tiefe Frequenzen genügend gross und machen den Frequenzgang des Mikrofons 3 bis zur unteren Eckfrequenz flach. Diese untere Eckfrequenz ist durch die Kapazität der Membran 13 und den Eingangswiderstand des verwendeten Impedanzwandlers bestimmt und liegt deutlich unter 10Hz liegt, vorzugsweise zwischen 1 und 4Hz, so dass das Signal bei der Nutzfrequenz von etwa 20 bis 30Hz von der unteren Eckfrequenz nur unwesentlich beeinflusst wird.

Das Mikrofon 3 ist auf dem Print 8 befestigt, welcher eine Ringnut 19 für die Positionierung der Bördelung des Mikrofons 3, ringförmige Kontaktstege 20 und 21 für die beiden Kreiselektroden 17 beziehungsweise 18, sowie eine Ringnut 22 mit einigen vom Grund der Ringnut durch den Print 8 geführten Bohrungen 23 aufweist. Die Bohrungen 23 und die Ringnut 22 ermöglichen die Zufuhr von Luft und Schall von aussen zu den Back Ports 15, ohne dass diese auf irgendwelche Bohrungen im Print 8 ausgerichtet werden müssen.

Das Mikrofon 3 und der Print 8 brauchen beim Bestücken nicht ausgerichtet zu werden, was eine leichte Montage mit einem Roboter ermöglicht. Die Montage wird noch durch die Ringnut 19 erleichtert, die das Mikrofon 3 mit seiner Gehäusebördelung beim Platzieren automatisch in die richtige Position führt. Die Kreiselektroden 17 und 18 werden mit der Leiterplatte 17 mit Leitepoxy verklebt und elektrisch verbunden. Die Aussenkontur von Messzelle 1, Referenzzelle 2 und des Reflektorgehäuse 5 ist durchgehend gleichbleibend, so dass sich die Teile als Strangprofile kostengünstig ziehen lassen und die notwendige Bearbeitung auf ein Minimum reduziert wird.

Im Rahmen des Herstellungsprozess des Gassensors erfolgt die Fertigung/Bereitstellung der einzelnen Komponenten des Sensors, d.h. des Reflektors 5 mit seinem Gehäuse, der beiden Zellkörper für Messzelle 1 und Referenzzelle 2, des Bandpassfilters 6, des Mikrofons 3 und der Mikroglühlampe 4. Das Bandpassfilter 6 wird in die Messzelle 1 eingeklebt und dann wird das Mikrofon 3 auf dem Print 8 montiert. Messzelle 1 und Referenzzelle 2 bestehen vorzugsweise aus Aluminium oder Zinkdruckguss.

Anschliessend werden diese Komponenten zu einem aus Fig. 4 ersichtlichen Messmodul M zusammen gesetzt, was durch die in Fig. 3 dargestellte Batch-Stapelverarbeitung erfolgt. Es wird jeweils eine Referenzzelle 2 mit dem bestückten Mikrofon-Print 8, der Messzelle 1, dem den Reflektor 24 enthaltenden Reflektorgehäuse 5, in welches die Mikroglühlampe 4 eingesetzt ist, und dem bestückten Mikroglühlampen-Print 10 zu einem Stapel verbunden, was entweder durch Kleben oder durch Zusammenspannen erfolgt. Im ersten Fall sind die Dichtungen 9 (Fig. 1) nicht erforderlich, weil durch die Klebeverbindung das Innere der Zellkörper 1 und 2 abgedichtet wird. Das Zusammenspannen erfolgt mit Hilfe eines in Längsrichtung des Sensors (Richtung der Pfeile in Fig. 3) wirkenden federnden Organs, beispielsweise einer Klammer.

In die Messzelle 1 und die Referenzzelle 2 des fertigen Messmoduls M werden anschliessend die Membranen 7, 7' eingesetzt und schliesslich wird das Messmodul M auf einen Modulprint P bestückt, was durch Kleben oder Löten erfolgen kann. Das vormontierte Messmodul M ist komplett und funktionsfähig und kann vorab als Einheit geprüft werden, bevor es auf dem Modulprint P bestückt wird. Das Messmodul M kann auf beliebigen anderen Leiterplatten wie ein Bauteil als Sub-Modul eingefügt werden, wobei für das Mikrofon 3, den Reflektor 24 und die Mikroglühlampe 4 keine Toleranz- oder Ausrichtprobleme entstehen.

Es ist offensichtlich, dass die beschriebene Herstellung des Sensors wesentlich einfacher und kostengünstiger ist als die bisher bekannten Herstellverfahren, bei denen das Mikrofon und die Mikroglühlampe auf einer Basisleiterplatte montiert und anschliessend die Messzelle um diese Komponenten herum einzeln aufgebaut wird.

## Patentansprüche

1. Photoakustischer Gassensor mit einer Mess- und einer Referenzzelle (1 bzw. 2), einem Strahler und einem Differenzmikrofon (3) für die Messung der Druckdifferenz zwischen Mess- und Referenzzelle (1 bzw. 2), **dadurch gekennzeichnet, dass** das Differenzmikrofon (3) durch ein so genanntes Noise Cancelling Mikrofon der in Mobiltelefonen verwendeten Art gebildet ist.

2. Photoakustischer Gassensor nach Anspruch 1, **dadurch gekennzeichnet, dass** die untere Eckfrequenz des Differenzmikrofons (3) kleiner ist als 10Hz und vorzugsweise zwischen 1 und 4Hz liegt.

3. Photoakustischer Gassensor nach Anspruch 2, **dadurch gekennzeichnet, dass** das Differenzmikrofon (3) Elektroden in der Form von konzentrischen Kreisringen (17, 18) aufweist.

4. Photoakustischer Gassensor nach Anspruch 3, **dadurch gekennzeichnet, dass** das Differenzmikrofon (3) ein dosenförmiges Gehäuse (G) aufweist, dessen Boden die Vorderseite des Mikrofons bildet und dessen Rückseite eine Bördelung für die Fixierung einer Rückplatte (14) aufweist.

5. Photoakustischer Gassensor nach Anspruch 4, **dadurch gekennzeichnet, dass** das Differenzmikrofon (3) auf einem Print (8) befestigt ist, welcher eine erste Ringnut (19) für die Positionierung der genannten Bördelung aufweist.

6. Photoakustischer Gassensor nach Anspruch 5, **dadurch gekennzeichnet, dass** in der Rückplatte (14) Ausgleichsbohrungen (15) vorgesehen sind, und dass der Print (8) eine zweite Ringnut (22) mit durch den Print (8) geführten Bohrungen (23) aufweist, wobei durch die zweite Ringnut (22) und die genannten Bohrungen (23) der Zutritt von Schall aus dem Aussenraum zu den Ausgleichsbohrungen (15) ermöglicht ist.

7. Photoakustischer Gassensor nach einem der Ansprüche 1 bis 6, **dadurch gekennzeichnet, dass** der Strahler durch eine auf einem Print (10) befestigte Mikroglühlampe (4) und einen in einem Reflektorgehäuse (5) vorgesehenen Reflektor (24) gebildet ist

8. Photoakustischer Gassensor nach Anspruch 7, **dadurch gekennzeichnet, dass** die Messzelle (1), die Referenzzelle (2) und das Reflektorgehäuse (5) gleiche Aussenkonturen aufweisen.

9. Photoakustischer Gassensor nach einem der Ansprüche 1 bis 8, **dadurch gekennzeichnet, dass** zu beiden Seiten des Differenzmikrofons (3) je ein Dichtungsplättchen (9) vorgesehen ist.
